# FASCICULE DE BREVET EUROPEEN

(11) **EP 0 387 158 B1**
(45) Date de publication et mention de la délivrance du brevet: **11.08.1993**
(21) Numéro de dépôt: 90420090.4
(22) Date de dépôt: 21.02.1990
(51) Int. Cl.: H02B 1/20, H01R 9/26

(54) **Dispositif d'assemblage et de liaison par peigne d'appareils électriques modulaires**
Anordnung zum Zusammenbauen und Verbinden elektrischer Apparatemodule mittels eines Kamms
Device for assembly and connection of electrical equipment modules by a comb

(30) Priorité: 10.03.1989 FR 8903278
(43) Date de publication de la demande: 12.09.1990
(73) Titulaire: MERLIN GERIN, F-38240 Meylan (FR)
(72) Inventeur: Bernard, Patrick, F-38050 Grenoble Cedex (FR); De Robertis, Patrick, F-38050 Grenoble Cedex (FR); Pin, Bernard, F-38050 Grenoble Cedex (FR)
(74) Mandataire: Hecké, Gérard

(56) Documents cités:
- CH-A- 652 241
- DE-C- 3 629 796
- GB-A- 1 584 638

## Description

L'invention est relative à un dispositif d'assemblage et de liaison d'une pluralité d'appareils électriques de puissance et de blocs auxiliaires, fixés par imbrication sur un rail de montage et ayant des boîtiers modulaires accolés côte à côte pour former une rangée horizontale, l'interconnexion de l'ensemble des appareils électriques de puissance s'opérant au moyen d'un peigne de raccordement commun, s'étendant parallèlement à la direction longitudinale du rail, et ayant une succession de dents de connexion réparties longitudinalement à intervalles prédéterminés pour l'introduction dans les bornes d'alimentation correspondantes situées sur les faces latérales étroites coplanaires desdits appareils.

L'imbrication dans une même rangée d'appareils de puissance, par exemple des disjoncteurs, et de modules auxiliaires, notamment un déclencheur différentiel, un module de signalisation de défaut ou de la position des contacts, un déclencheur à manque de tension ou à émission, imposait jusqu'à présent la suppression des dents non utilisées d'un peigne standard. Cette suppression s'effectue au niveau de chaque module auxiliaire, par sciage préalable desdites dents. Si le monteur veut par la suite modifier la répartition modulaire des appareils du coffret, le peigne prédécoupé risque de ne plus convenir au nouveau montage, et doit être jeté. La préparation du peigne pour chaque rangée spécifique augmente d'autre part le temps de raccordement.

L'objet de l'invention consiste à diminuer le temps de raccordement en conservant la structure d'un peigne standard dans chaque rangée.

Le dispositif d'assemblage et de liaison selon l'invention est caractérisé en ce que le boîtier de chaque bloc auxiliaire comporte des moyens de logement des dents non utilisées du peigne.

Les moyens de logement comportent soit une rainure en forme d'encoche semi-ouverte ménagée sur toute la largeur du boîtier, soit au moins un trou borgne pratiqué dans la face latérale étroite voisine du peigne.

La profondeur de la rainure et/ou du trou est agencée pour autoriser la pénétration totale des dents non utilisées.

L'invention est applicable pour des modules auxiliaires adaptables par le client, ou montés en usine.

D'autres avantages et caractéristiques ressortiront plus clairement de la description qui va suivre d'un mode de mise en oeuvre de l'invention, donné à titre d'exemple non limitatif, et représenté aux dessins annexés dans lesquels:
- la figure 1 représente une vue schématique éclatée en perspective d'une rangée d'appareils modulaires;
- la figure 2 est une vue identique de la figure 1, en position accolée des appareils et après mise en place du peigne de raccordement;
- la figure 3 montre une vue en perspective d'un disjoncteur différentiel monobloc, équipé de trous de passage des dents de peigne sur deux côtés opposés du boîtier.

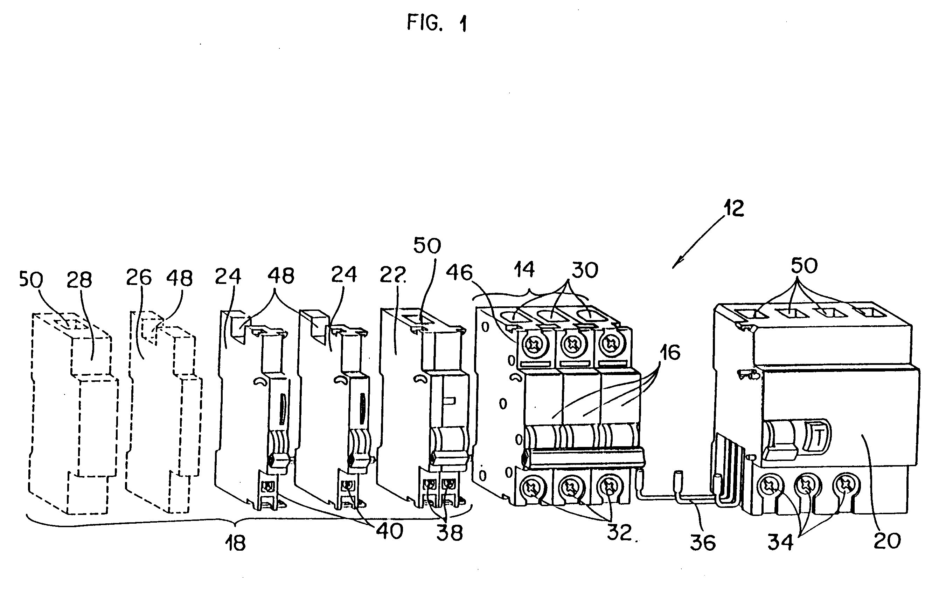

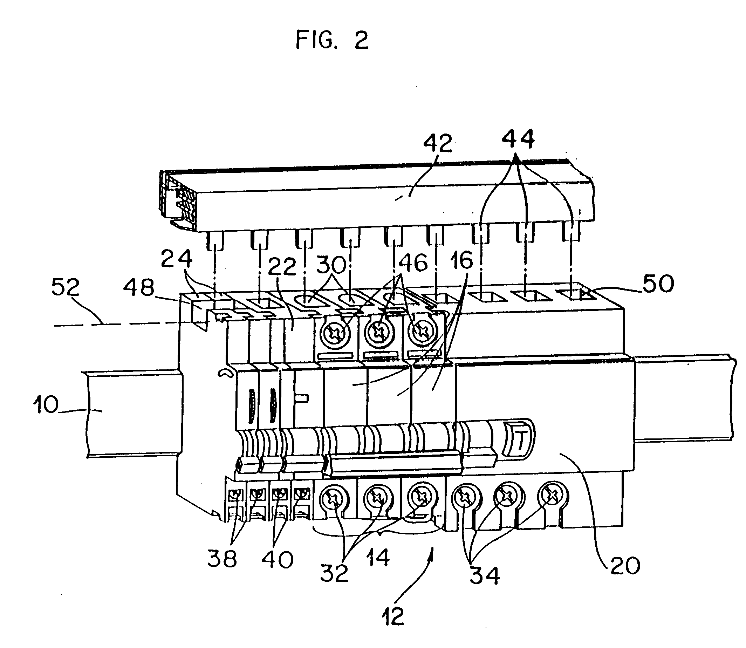

La figure 1 montre une pluralité d'appareils électriques à boîtiers modulaires destinés à être fixés sur un rail de montage 10, et accolés côte à côte en formant une rangée 12 horizontale (figure 2).

La rangée 12 comporte un bloc disjoncteur 14 triphasé formé par trois disjoncteurs unipolaires 16 du type décrit dans le brevet français 2.616.583. Au bloc disjoncteur 14 sont accouplés plusieurs blocs auxiliaires 18,20, notamment de déclenchement, de commande et de signalisation. Sur le côté droit du bloc disjoncteur 14, est agencé un bloc auxiliaire de déclenchement différentiel 20 du type décrit dans les demandes de brevets français Nos. 8802907 et 8816592. Sur le côté gauche du bloc disjoncteur 14 sont échelonnés, un module auxiliaire de déclenchement 22 à manque de tension MN ou à émission MX, un module auxiliaire de signalisation 24 de défaut SD et/ou de la position des contacts CAOF, et d'autres modules auxiliaires 26,28 (en pointillé sur la figure 1).

Le module auxiliaire MN ou MX 22 est décrit dans la demande de brevet français 8812725, et le module auxiliaire de signalisation 24 dans la demande de brevet français 8801151.

La rangée 12 peut encore comporter des disjoncteurs 16 supplémentaires, et d'autres appareils de puissance, tels des contacteurs, des interrupteurs, des télérupteurs, etc... Chacun des pôles de ces appareils de puissance comporte une borne d'alimentation 30 et une borne de ligne 32 ou de départ, situées respectivement sur les faces latérales étroites opposées du boîtier modulaire. Le bloc auxiliaire de déclenchement différentiel 20 est équipé sur sa face inférieure de bornes de raccordement 34, alors que l'autre face supérieure est dépourvue de bornes. La connexion électrique entre les deux blocs 14,20 s'effectue au moyen d'un faisceau de conducteurs de liaison 36 raccordés aux bornes 32 correspondantes.

Chacun des modules auxiliaires 22,24 est doté de bornes de connexion 38,40 situées le long de la face inférieure avec les bornes 32,34 appartenant aux deux blocs 14,20. Du côté de la face supérieure, les modules auxiliaires ne possèdent pas de bornes.

Les bornes d'alimentation 30 de l'ensemble des disjoncteurs 16 et autres appareils de puissance, à l'exclusion des modules auxiliaires 20,22,24,26,28 d'une même rangée 12 sont interconnectées par un peigne de raccordement 42 commun (figure 2). La répartition longitudinale des dents 44 de connexion du peigne 42 est décrite en détail dans la demande de brevet français n° 8812232. Les dents 44 saillantes s'étendent perpendiculairement à la direction longitudinale du peigne 42 et pénètrent dans les cages correspondantes des bornes d'alimentation 30. Le serrage s'opère au moyen de vis accessibles par des ouvertures 46 circulaires.

Selon l'invention, le boîtier de chaque module auxiliaire 20 à 28 des deux blocs 18,20 comporte des moyens de logement pratiqués dans la face supérieure du côté des bornes d'alimentation 30 pour autoriser le passage des dents 44 non utilisées. Ces moyens de logement peuvent être constitués par une rainure 48 continue en forme d'encoche semi-ouverte pratiquée sur toute la largeur de chaque module 24 ou 26, et par des trous 50 borgnes prévus pour les autres modules auxiliaires 20,22,28. La section des trous 50 peut être quelconque.

La profondeur de la rainure 48 et des trous 50 est légèrement supérieure à la longueur des dents 44, et toutes les faces supérieures des boîtiers modulaires se trouvent sensiblement dans un même plan horizontal, de trace 52 parallèle à la direction longitudinale du rail de montage 10.

La mise en place du peigne 42 est ainsi facilitée grâce à la présence des trous 50 et rainures 48 dans les modules auxiliaires 20 à 28. La structure du peigne 42 est conservée, et les dents 44 non utilisées ne doivent pas être sciées. L'interconnexion des dents 44 utilisées s'effectue ensuite au moyen des vis de serrage associées aux bornes d'alimentation 30 des disjoncteurs 16 ou autres appareils de puissance.

Selon une variante, les modules 20 à 28 auxiliaires sont intégrés en usine aux appareils de puissance correspondants.

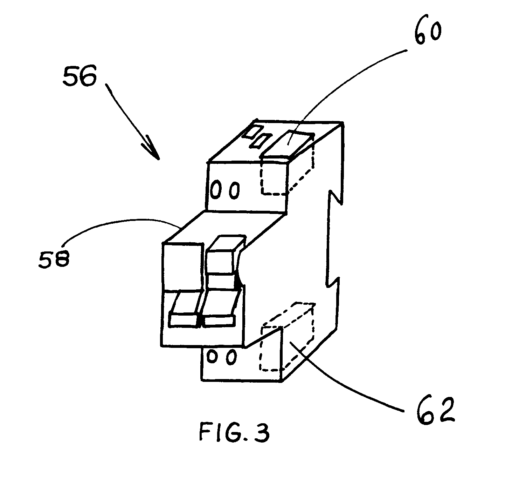

Sur la figure 3, un disjoncteur différentiel 56 unipolaire et neutre à boîtier 58 monobloc comporte deux trous 60, 62 sur deux faces opposées de la partie différentielle. Le peigne peut alors être disposé au choix contre le côté amont ou le côté aval.

## Revendications

1. Dispositif d'assemblage et de liaison d'une pluralité d'appareils électriques de puissance (16) et de blocs auxiliaires (18,20), fixés par imbrication sur un rail de montage (10) et ayant des boîtiers modulaires accolés côte à côte pour former une rangée (12) horizontale, l'interconnexion de l'ensemble des appareils électriques de puissance (16) s'opérant au moyen d'un peigne (42) de raccordement commun, s'étendant parallèlement à la direction longitudinale du rail (10), et ayant une succession de dents (44) de connexion réparties longitudinalement à intervalles prédéterminés pour l'introduction dans les bornes d'alimentation (30) correspondantes situées sur les faces latérales étroites coplanaires desdits appareils, caractérisé en ce que le boîtier de chaque bloc auxiliaire (18,20) comporte des moyens de logement des dents (44) non utilisées du peigne (42).

2. Dispositif d'assemblage et de liaison selon la revendication 1, caractérisé en ce que lesdits moyens de logement comportent une rainure (48) en forme d'encoche semi-ouverte ménagée sur toute la largeur du boîtier.

3. Dispositif d'assemblage et de liaison selon la revendication 1, caractérisé en ce que lesdits moyens de logement sont formés par au moins un trou (50, 60, 62) borgne pratiqué dans la face latérale étroite voisine du peigne 42.

4. Dispositif d'assemblage et de liaison selon la revendication 2 ou 3, caractérisé en ce que la profondeur de la rainure (48) et/ou du trou (50, 60, 62) est agencée pour autoriser la pénétration totale des dents (44) non utilisées.

5. Dispositif d'assemblage et de liaison selon l'une des revendications 1 à 4, caractérisé en ce que les appareils électriques de puissance (16) unipolaires ou multipolaires sont formés au choix par des disjoncteurs, des contacteurs, des interrupteurs et des télérupteurs, et que les blocs auxiliaires (18,20) comportent au moins un module de signalisation (24) de défaut SD et/ou de la position des contacts CAOF, un module déclencheur (22) à manque de tension MN ou à émission MX, et un module déclencheur différentiel (20).

6. Dispositif d'assemblage et de liaison selon la revendication 5, caractérisé en ce que les modules (20,22,24,26,28) des blocs auxiliaires sont adaptables par le client.

7. Dispositif d'assemblage et de liaison selon la revendication 5, caractérisé en ce que les modules (20 à 28) des blocs auxiliaires sont intégrés en usine aux appareils de puissance correspondants.

## Patentansprüche

1. Vorrichtung zur Montage und Verbindung mehrerer auf einer Montageschiene (10) im Verband befestigter Leistungs-Schaltgeräte (16) und Hilfsblöcke (18, 20), deren Gehäuse zur Bildung einer waagerechten Reihe (12) nebeneinandergereiht sind, wobei die elektrische Verbindung der Leistungs-Schaltgeräte untereinander über eine gemeinsame Kammschiene (42) erfolgt, die parallel zur Längsachse der Schiene (10) verläuft und eine Reihe von auf der Längsachse in festgelegten Abständen aufeinanderfolgenden Verbindungszähnen (44) zur Einführung in die entsprechenden Einspeiseklemmen (30) aufweist, die an den in einer Ebene liegenden schmalen Seitenflächen der genannten Schaltgeräte angebracht sind, dadurch gekennzeichnet, daß das Gehäuse jedes Hilfsblocks (18, 20) Aufnahmemittel zur Einführung der nicht verwendeten Zähne (44) der Kammschiene (42) aufweist.

2. Montage- und Verbindungsvorrichtung nach Anspruch 1, dadurch gekennzeichnet, daß die genannten Aufnahmemittel eine Nut (48) in Form einer über die gesamte Gehäusebreite ausgebildeten halboffenen Aussparung aufweisen.

3. Montage- und Verbindungsvorrichtung nach Anspruch 1, dadurch gekennzeichnet, daß die genannten Aufnahmemittel in Form mindestens eines an der der Kammschiene (42) zugewandten schmalen Seitenfläche angebrachten Blindlochs (50, 60, 62) ausgeführt sind.

4. Montage- und Verbindungsvorrichtung nach Anspruch 2 oder 3, dadurch gekennzeichnet, daß die Tiefe der Nut (48) und/oder der Blindlöcher (50, 60, 62) so bemessen ist, daß die nicht verwendeten Zähne (44) vollständig eingeführt werden können.

5. Montage- und Verbindungsvorrichtung nach einem der Ansprüche 1 bis 4, dadurch gekennzeichnet, daß die ein- oder mehrpoligen Leistungs-Schaltgeräte (16) wahlweise Leistungsschalter, Schütze, Lasttrennschalter und Stoßstromrelais und die Hilfsblöcke (18, 20) mindestens ein Anzeigemodul SD oder CAOF (24) zur Fehlermeldung bzw. Kontaktstellungsanzeige, ein Auslösemodul mit Unterspannungsauslöser MN oder Arbeitsstromauslöser MX sowie ein Differenzstrommodul (20) umfassen.

6. Montage - und Verbindungsvorrichtung nach Anspruch 5, dadurch gekennzeichnet, daß die Module (20, 22, 24, 26, 28) der Hilfsblöcke durch den Kunden spezifizierbar sind.

7. Montage- und Verbindungsvorrichtung nach Anspruch 5, dadurch gekennzeichnet, daß die Module (20 bis 28) der Hilfsblöcke werksseitig in die entsprechenden Leistungs-Schaltgeräte integriert sind.

## Claims

1. A device for assembly and connection of a plurality of electrical power switchgear (16) and auxiliary units (18, 20), fixed by imbrication on a mounting rail (10) and having modular cases adjoined side by side to form a horizontal row (12), interconnection of the set of electrical power switchgear (16) being performed by means of a common connecting comb (42), extending parallel to the longitudinal direction of the rail (10), and having a succession of connecting teeth (44) staggered longitudinally at preset intervals for insertion in the corresponding supply terminals (30) located on the coplanar narrow side faces of said switchgear, characterized in that the case of each auxiliary unit (18, 20) comprises means for housing the unused teeth (44) of the comb (42).

2. The assembly and connection device according to claim 1, characterized in that said housing means comprise a groove (48) in the form of a semi-open notch arranged over the whole width of the case.

3. The assembly and connection device according to claim 1, characterized in that said housing means are formed by at least one blind hole (50, 60, 62) made in the narrow side face near to the comb (42).

4. The assembly and connection device according to claim 2 or 3, characterized in that the depth of the groove (48) and/or hole (50, 60, 62) is arranged to allow total penetration of the unused teeth (44).

5. The assembly and connection device according to one of the claims 1 to 4, characterized in that the single-pole or multi-pole electrical power switchgear (16) is formed as desired by circuit breakers, contactors, switches or remote-controlled switches, and that the auxiliary units (18, 20) comprise at least one signalling module (24) of a fault SD and/or of the contact position CAOF, an undervoltage MN or shunt MX trip module (22), and a differential trip module.

6. The assembly and connection device according to claim 5, characterized in that the modules (20,22,24,26,28) of the auxiliary units are adaptable by the customer.

7. The assembly and connection device according to claim 5, characterized in that the modules (20 to 28) of the auxiliary units are built into the corresponding power switchgear in the factory.
